# EUROPEAN PATENT APPLICATION

(11) **EP 4 524 733 A1**
(43) Date of publication of application: **19.03.2025**
(21) Application number: 23854463.9
(22) Date of filing: 16.08.2023
(51) Int. Cl.: G06F 9/451

(54) **CONTENT DISPLAY METHOD AND APPARATUS, AND DEVICE AND STORAGE MEDIUM**

(30) Priority: 19.08.2022 CN 202210999813
(71) Applicant: Beijing Zitiao Network Technology Co., Ltd., Beijing 100190 (CN)
(72) Inventor: CHANG, Weiyi, Beijing 100028 (CN); LI, Yaping, Beijing 100028 (CN); CHEN, Haiyun, Beijing 100028 (CN)
(74) Representative: Dentons UK and Middle East LLP
(86) International application number: PCT/CN2023/113323
(87) International publication number: WO 2024/037563

(57) **Abstract**

Embodiments of the present disclosure provide a method and apparatus for content presentation, a device and a storage medium, and relate to the computer technology field. The method comprises: displaying a floating control in a target interface and presenting a media stream in the floating control; in response to detecting a user triggering the floating control, determining a trigger position and detecting a current gesture operation starting from the trigger position; determining a current operation type of the detected current gesture operation in accordance with a target region where the trigger position is located in the floating control, and correspondingly controlling the floating control based on the current operation type and the current gesture operation, wherein different operation types correspond to different regions in the floating control.

## Description

The present application claims the priority right of the Chinese patent application filed with the China Intellectual Property Administration on August 19, 2022, having the application No. 202210999813.0. The full disclosure of this Chinese patent application is incorporated in the present disclosure by reference.

### FIELD

Embodiments of the present disclosure relate to the field of computer technology, for example, to method and apparatus for content presentation, device and storage medium.

### BACKGROUND

With rapid development of Internet technology and terminal technique, contents that can be presented in applications become increasingly abundant.

At present, many applications support the display of a floating control, such as a floating window, in application interfaces. Different contents are displayed in the application interfaces and the floating windows respectively, such that the users may view various contents simultaneously. However, it is required to optimize the content display scheme based on the floating window, so as to enhance the user experience.

### SUMMARY

Embodiments of the present disclosure provide method and apparatus for content presentation, device and storage medium, to optimize the content presentation scheme based on the floating control in the related technical field.

In a first aspect, embodiments of the present disclosure provide a method for content presentation, comprising:
displaying a floating control in a target interface and presenting a media stream in the floating control;
in response to detecting a user triggering the floating control, determining a trigger position and detecting a current gesture operation starting from the trigger position;
determining a current operation type of the detected current gesture operation in accordance with a target region where the trigger position is located in the floating control, and correspondingly controlling the floating control based on the current operation type and the current gesture operation, wherein different operation types correspond to different regions in the floating control.

In a second aspect, embodiments of the present disclosure also provide an apparatus for content presentation, comprising:
a floating control display module configured to display a floating control in a target interface and present a media stream in the floating control;
a gesture operation detecting module configured to, in response to detecting a user triggering the floating control, determine a trigger position and detect a current gesture operation starting from the trigger position;
a floating control controlling module configured to determine a current operation type of the detected current gesture operation in accordance with a target region where the trigger position is located in the floating control; and correspondingly control the floating control based on the current operation type and the current gesture operation, wherein different operation types correspond to different regions in the floating control.

In a third aspect, embodiments of the present disclosure also provide an electronic device, comprising:
at least one processor;
a memory device configured to store at least one program;
when the at least one program is executed by the at least one processor, the at least one processor is enabled to implement the method for content presentation provided by embodiments of the present disclosure.

In a fourth aspect, embodiments of the present disclosure also provide a storage medium containing computer-executable instructions, the computer-executable instructions, when executed by a computer processor, implementing the method for content presentation provided by embodiments of the present disclosure.

### BRIEF DESCRIPTION OF THE DRAWINGS

Fig. 1 illustrates a schematic flowchart of a method for content presentation provided by embodiments of the present disclosure;
Fig. 2 illustrates a schematic diagram of an interface provided by embodiments of the present disclosure;
Fig. 3 illustrates a schematic flowchart of a method for content presentation provided by embodiments of the present disclosure;
Fig. 4 illustrates a schematic diagram of an interface interaction provided by embodiments of the present disclosure;
Fig. 5 illustrates a schematic diagram of a further interface interaction provided by embodiments of the present disclosure;
Fig. 6 a structural diagram of an apparatus for content presentation provided by embodiments of the present disclosure;
Fig. 7 illustrates a structural diagram of an electronic device provided by the embodiments of the present disclosure.

### DETAILED DESCRIPTION OF EMBODIMENTS

As used herein, the term "includes" and its variants are to be read as open-ended terms that mean "includes, but is not limited to." The term "based on" is to be read as "based at least in part on." The term "one embodiment" is to be read as "at least one embodiment." The term "a further embodiment" is to be read as "at least a further embodiment." The term "some embodiments" is to be read as "at least some embodiments". Related definitions of other terms may be provided in the following description.

It is to be noted that "first" and "second" are disclosed in the present disclosure merely for distinguishing different apparatuses, modules or units, rather than restricting the sequence of the functions executed by the apparatuses, modules or units or the interdependency among the apparatuses, modules or units.

It is to be noted that the terms "one" and "more" disclosed in the present disclosure are exemplary rather than restrictive. Those skilled in the art should understand that the above terms are to be read as "at least one" unless indicated otherwise in the context.

Names of the messages or information exchanged between a plurality of apparatuses in the implementations of the present disclosure are provided only for explanatory purpose, rather than restricting the scope of the messages or information.

It is to be appreciated that prior to the use of the technical solutions disclosed by embodiments of the present disclosure, type, usage scope and application scenario of personal information involved in the present disclosure are made known to users through suitable ways in accordance with the relevant laws and regulations, to obtain user authorization.

For example, in response to receiving an active request from the users, a prompt message is sent to the users to clearly inform them that the operation requested to be executed needs to obtain and use their personal information. Accordingly, the users may voluntarily select, in accordance with the prompt message, whether to provide their personal information to software or hardware that performs operations of the technical solution, such as electronic device, application program, server or storage medium.

As an optional and non-restrictive implementation, in response to receiving an active request from the users, a prompt message is sent to the users, wherein the prompt message may be present in the form of pop-up window as an example and the prompt message may be displayed in text in the pop-up window. Besides, the pop-up window also may be provided with a select control through which the users may choose to "agree" or "disagree" the provision of personal information to the electronic device.

It should be appreciated that the above procedure for informing the users and obtaining the user authorization is only exemplary and does not restrict the implementations of the present disclosure. Other methods may also be applied to the implementations of the present disclosure as long as they comply with relevant regulations and laws.

It is to be understood that data (including but not limited to the data per se, acquisition or use of the data) involved in the technical solution should comply with corresponding laws and regulations.

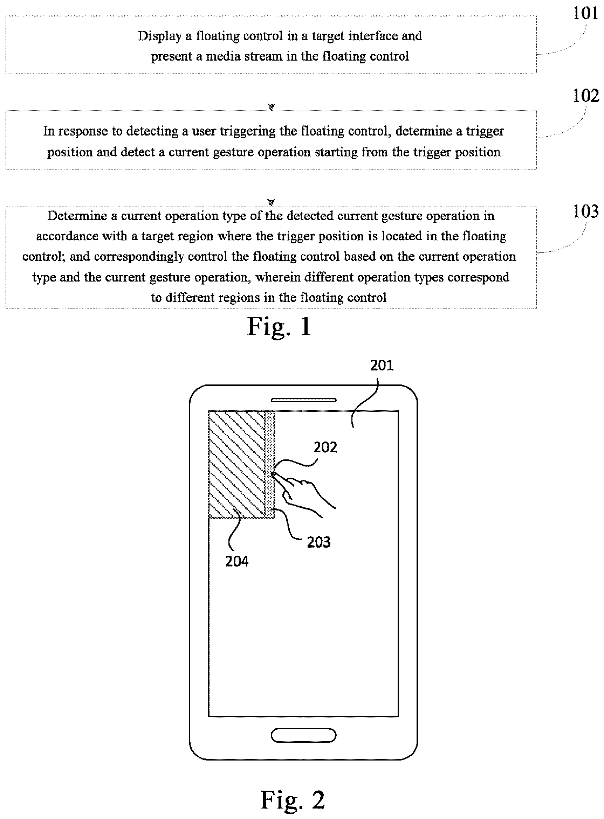

Fig. 1 illustrates a schematic flowchart of a method for content presentation provided by embodiments of the present disclosure. Embodiments of the present disclosure are adapted to content presentation scenarios. The method may be executed by an apparatus for content presentation, which apparatus may be implemented in the form of at least one of software and hardware. Optionally, the apparatus is implemented by an electronic device, where the electronic device may be mobile terminals such as a cellphone, a smart watch, a tablet computer and a personal digital assistant etc., or a Personal Computer (PC) terminal or a server etc.

As shown in Fig. 1, the method comprises:
Step 101: displaying a floating control in a target interface and presenting a media stream in the floating control.

In the embodiments of the present disclosure, the target interface may be an interface in a preset application. The type of the preset application is not restricted. For example, it may be a video application, a live broadcast application, a shopping application or a news application etc. Other types of application are also feasible. The target interface may be any interface in the preset application. The interface type and the contained interface content are not restricted. For instance, the interface may be a message exchange interface, a media content present interface, a product detail interface or a news information display interface etc.

As an example, the floating control may be understood as view element. Displaying a floating control in the target interface may be appreciated as superimposing and displaying the view element on the upper layer of the target interface, wherein a property of the floating control, such as shape, size, color, transparency and display position etc., may be configured according to the actual needs. For example, the floating control may be a control in the form of floating window.

In the embodiments of the present disclosure, a media stream is presented in the floating control and the media contents contained in the media stream may include images, graphic-texts, audios or videos etc. The media stream presented in the floating control may be a media stream pushed to current users. For example, a corresponding media stream determination method is generated based on the current users, and an individualized media stream for the current users is determined by the media stream determination method. Embodiments of the present disclosure are also applicable to content sharing scenario. That is, the current users may share the media stream with at least one peer user and the media stream presented in the floating control also may be a shared media stream.

Fig. 2 illustrates a schematic diagram of an interface provided by embodiments of the present disclosure. As shown, a floating control 202 is displayed in a target interface 201. Optionally, the floating control 202 is located at a top left corner of the target interface 201. The media stream is presented in the floating control 202.

Step 102: in response to detecting a user triggering the floating control, determining a trigger position and detecting a current gesture operation starting from the trigger position.

As an example, the user may trigger a screen (touch screen) of an electronic device by a body part like fingers or an object such as stylus (hereinafter referred to as "trigger object"). For example, the user may trigger the floating window displayed in the target interface. When the user triggers the floating control displayed in the touch screen by the trigger object, the trigger position of the trigger object may be detected via the touch screen and a gesture operation starting from the trigger position may be further detected via the trigger screen. The gesture operation, for example, may be swiping, tap and hold, or dragging etc.

Step 103: determining a current operation type of the detected current gesture operation in accordance with a target region where the trigger position is located in the floating control; and correspondingly controlling the floating control based on the current operation type and the current gesture operation, wherein different operation types correspond to different regions in the floating control.

As an example, the floating control may be divided into at least two regions. Exemplary dividing methods are not restricted. For example, the floating control may be divided into upper and lower regions, or left and right regions, or central and peripheral regions etc. According to Fig. 2, the floating control 202 is divided into left and right regions, respectively being first region 203 and second region 204.

Wherein different regions correspond to different operation types of the same gesture operation. The different operation types are defined as different controls over the floating control. As an example, the operation type may include at least one of moving the floating control (denoted as first operation type), switching the media content currently presented in the floating control (denoted as second operation type), and adjusting size of the floating window (denoted as third operation type). Moving the floating control may be understood as adjusting the display position of the floating control in the target interface; switching the media content currently presented in the floating control may be appreciated as switching the media content currently presented in the floating control to a further media content (e.g., previous media content or next media content) in the media stream; and adjusting size of the floating window is to adjust width, height or aspect ratio of the floating window.

For example, the first region 203 corresponds to the first operation type and the second region 204 corresponds to the second operation type as shown in Fig. 2.

As an example, upon detection of the current gesture operation, the current operation type of the current gesture operation may be determined according to the region (indicated as target region) in which the trigger position falls. Further, the floating control is correspondingly controlled based on the current operation type and the current gesture operation.

According to Fig. 2, the trigger position where the user triggers the floating control by fingers is in the first region 203. As such, the first region 203 is the target region and the corresponding operation type is the first operation type. The floating control is controlled to move according to the current gesture operation. Assuming that the trigger position where the user triggers the floating control by fingers is in the second region 204, the second region 204 is the target region and the corresponding operation type is the second operation type. Accordingly, the media content currently presented in the floating control is switched according to the current gesture operation.

The method for content presentation provided by embodiments of the present disclosure displays a floating control in a target interface and presents a media stream in the floating control; in response to detecting a user triggering the floating control, determines a trigger position and detects a current gesture operation starting from the trigger position; determines a current operation type of the detected current gesture operation in accordance with a target region where the trigger position is located in the floating control; and correspondingly controls the floating control based on the current operation type and the current gesture operation, wherein different operation types correspond to different regions in the floating control. With the above technical solution, the operation type of the user gesture operation may be accurately identified. The floating control for presenting the media stream is separately controlled in view of the different operation types, such that the floating control is more flexibly controlled and the media content is also flexibly presented, thereby satisfying diversified needs of the users for viewing the content media and enhancing the user experience.

In some embodiments, the current operation type is a first operation type; and the correspondingly controlling the floating control based on the current operation type and the current gesture operation includes: moving the floating control to a corresponding display position in the target interface based on at least one of the first operation type, an action direction of the current gesture operation, and an action distance and an action speed of the current gesture operation. The benefit of such setting is to more accurately control the movement of the floating control.

As an example, the current gesture operation may be a swiping operation, wherein the action direction may be the swiping direction, which corresponds to the moving direction of the floating control; the two directions may be the same; the action distance may be the swiping distance, which corresponds to the moving distance of the floating control; the two distances may be equal or positively correlated; the action speed may be the swiping speed, which corresponds to the moving speed of the floating control; the two speeds may be equal or positively correlated.

In some embodiments, the target interface includes a preset interface; and the method further comprises: upon detecting that a background play mode is triggered in the target interface, presenting a first media content currently presented in the floating control as a background of the target interface and cancelling display of the floating control. Under such setting, the presenting mode of the media content may be flexibly switched, such that the user can view the interface content of the preset interface and the media content in the media stream in different ways.

As an example, the background play mode may be understood as a mode in which the media content in the floating control is played as the background of the preset interface. The preset interface may include an interface where a ratio of a display area of the interface content to the total display area of the interface is smaller than a preset ratio threshold. The region for displaying the part other than the interface content may reveal the background content. The preset interface, for example, may include a message exchange interface (such as chat interface or message list interface etc.) and also may include a personal home interface.

In some embodiments, the target interface includes a message exchange interface, and the presenting a first media content currently presented in the floating control as a background of the target interface includes: replacing a background of the target interface with a first media content currently presented in the floating control, to cause an interface content of the message exchange interface to be displayed on an upper layer of the first media content, wherein the interface content includes at least one of a message content and an associated content of the message content.

As an example, for the message exchange interface, the interface content may include a message content and an associated content of the message content, wherein the associated content may be an object identifier (ID) of the message exchange object (such as user name or user avatar etc.). Accordingly, the user may view the media content in full screen (in case that the target interface is in the full screen display state) while sending and receiving messages. The user may gain the message exchange experience and the media content viewing experience simultaneously.

In some embodiments, the detecting that a background play mode is triggered in the target interface includes: in response to receiving a preset gesture operation in the target interface, determining that triggering of a background play mode is detected, wherein the preset gesture operation is configured as triggering the background play mode. The advantage of such setting is to trigger the background play mode conveniently through inputting the preset gesture operation, wherein the preset gesture operation, for example, may be a two-finger amplification operation performed on the floating control, i.e., the two fingers trigger the floating control and move towards opposite directions.

In some embodiments, the operation type includes a first operation type and the first operation type is to move the floating control; wherein the current operation type is a first operation type; and the correspondingly controlling the floating control based on the current operation type and the current gesture operation includes: moving the floating control to a corresponding display position in the target interface based on the first operation type and the current gesture operation; wherein the detecting that a background play mode is triggered in the target interface includes: upon detecting that the user stops triggering a screen, determining whether a current display position of the floating control is a target display position; in response to a current display position of the floating control being a target display position, determining that triggering of a background play mode is detected. With such setting, the first operation type may be multiplexed and the background play mode can be conveniently triggered during the movement of the floating window.

As an example, the target display position may be configured according to the actual needs. For example, the target display position includes a position within a preset range in the target interface. Optionally, the preset range contains a center point of the target interface. Optionally, at least one boundary of the preset range overlaps with the boundary of the target interface.

In some embodiments, it is determined whether the current display position of the floating control is the target display position. If the current display position of the floating control is the target display position, the determining that triggering of a background play mode is detected may include: judging whether the current display position of the floating control is the target display position; if yes, continuing to determine whether a duration when the current display position is maintained as the target display position is greater than a preset duration threshold; if the duration is greater than the preset duration threshold, it is determined that triggering of a background play mode is detected. Advantageously, with such setting, the user can more smoothly move the floating control. When it is not required to present the media content in the background, there is no need to avoid the preset range where the target display position is located. Error operations can thus be prevented.

In some embodiments, after presenting a first media content currently presented in the floating control as a background of the target interface and cancelling display of the floating control, the method includes: upon detecting that the current media content is finished playing, automatically switching to present a next media content in the media stream or automatically repeating playing the current media content. The benefit of such setting is to reduce active operations of the user and automatically play in a continuous or loop mode. The automatic play mode may be voluntarily set by the user in advance.

In some embodiments, after presenting a first media content currently presented in the floating control as a background of the target interface and cancelling display of the floating control, the method comprises: in response to a first preset operation on the target interface by the user, switching to a hidden state play mode to present the first media content, wherein, in the hidden state play mode, an interface content displayed on an upper layer of the background in the target interface under the background play mode is hidden. Due to such setting, the method may rapidly switch to present the media content in full screen by hiding the display of the interface content, so as to gain a purer media content viewing experience.

As an example, for the message exchange interface, the interface content required to be hidden may include the aforementioned message content and its associated content. In this way, the users may gain a purer media content viewing experience. The first preset operation may be an operation of triggering a preset hidden button, or a swiping operation, which swiping operation in general is in a direction different from the swiping operation for browsing the message content. For example, the operation of swiping up and down may be set as browsing message contents, while the operation of swiping left or right may be configured as hiding the interface content. Optionally, if the hidden interface content is triggered by the swiping operation, dynamic effects of a procedure of hiding the interface content may be set. For example, the interface content moves along with the swiping operation in the preset interface and gradually fades out from the preset interface to achieve the hiding effects.

In some embodiments, after the switching to a hidden state play mode to present the first media content, the method further comprises: in response to a second preset operation on the target interface by the user, switching a media content currently presented in the target interface. With such setting, while the media content is being presented in the hidden state play mode, the user may be allowed to switch the media content by inputting the second preset operation. The viewing experience is accordingly improved. The second preset operation, for example, may be a swiping operation, e.g., swiping up or swiping down.

Optionally, after switching to the hidden state play mode to display the first media content, the method also comprises: in response to a third preset operation on the target interface by the user, switching to the background play mode. The benefit of such setting is to conveniently switch back to present the interface content, such as recovering the display of the chat content. The third preset operation may be an operation of triggering a preset display button, and also may be a swiping operation, which swiping operation is in a direction opposite to the first present operation. For instance, the first preset operation may be swiping right, while the third preset operation may be swiping left.

In some embodiments, after the switching to a hidden state play mode to present the first media content, the method further comprises: displaying a preset control in the target interface; wherein the preset control is configured to execute at least one of: controlling a media content presented in the target interface; interacting with respect to a media content presented in the target interface; and triggering display of the floating control and switching a media content presented in the target interface to be presented in the floating control.

Optionally, the number of preset controls may be at least one and the display modes for different preset controls may be different. For example, a first preset control may be automatically displayed after the interface content is hidden, and the second preset control is displayed in response to an operation of triggering the target interface by the user (such as clicking the target interface). As an example, the control over the media content may include switching the media content, pausing the play of the media content or muting the sound of the media content etc. Interactions with respect to the media content presented in the target interface may include inputting a Like operation, inputting a Favorite operation, inputting a Forward operation or inputting comment contents etc.

In some embodiments, the current operation type is a second operation type; and the correspondingly controlling the floating control based on the current operation type and the current gesture operation includes: switching from a second media content currently presented in the floating control to a third media content based on the second operation type and an action direction of the current gesture operation, wherein the third media content is a previous media content or a next media content of the second media content in the media stream. With such setting, the media content to be switched may be quickly determined according to the action direction of the gesture operation without switching to the full screen mode and displaying the control in the floating control. The efficiency of content switching is therefore improved. Optionally, the second media content may be the same as or different from the first media content.

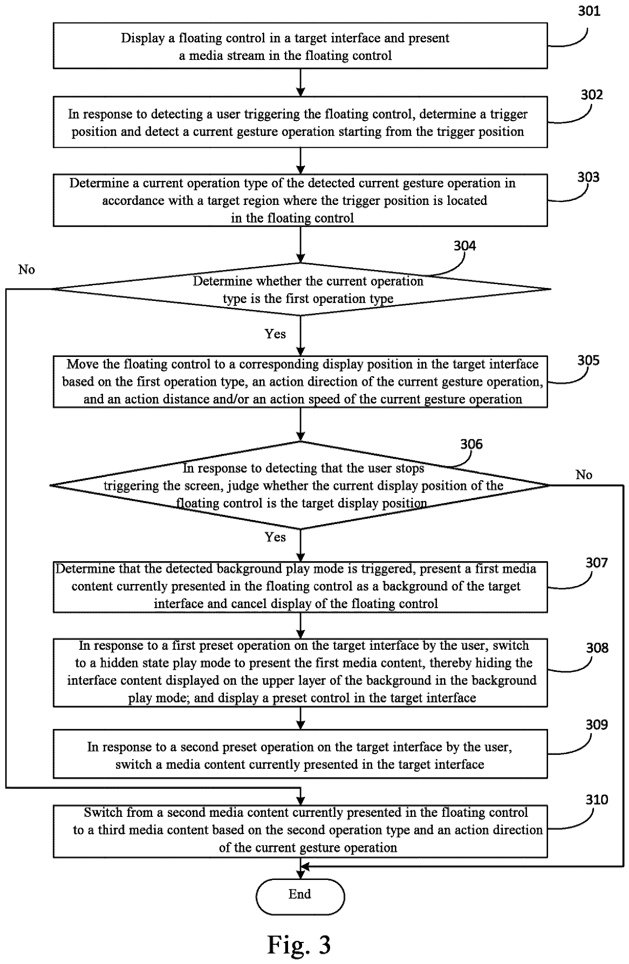

Fig. 3 illustrates a schematic flowchart of a method for content presentation provided by embodiments of the present disclosure. Embodiments of the present disclosure are optimized on the basis of a plurality of optional solutions in the above embodiments. As an example, the method includes steps of:

Step 301: displaying a floating control in a target interface and presenting a media stream in the floating control.

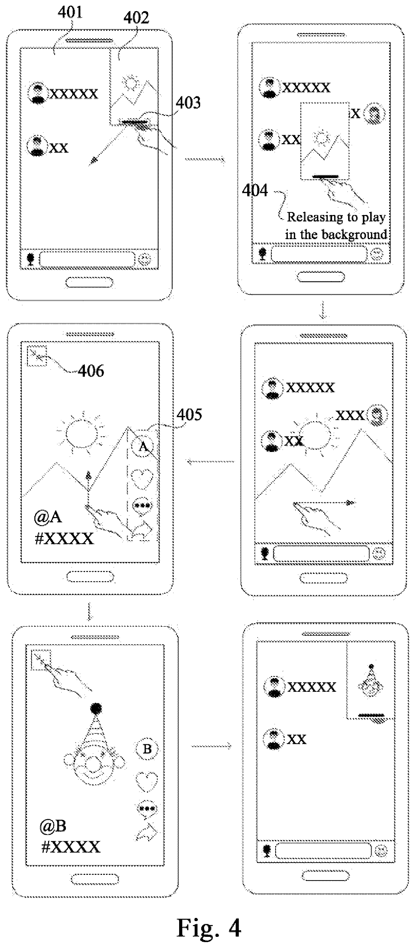

Fig. 4 illustrates a schematic diagram of an interface interaction provided by embodiments of the present disclosure. As shown in Fig. 4, a floating control 402 is displayed in a target interface 401, wherein the target interface 401, for example, may be a message exchange interface and a video stream may be presented in the floating control 402. At the bottom of the target interface 401, a related control for triggering message input may be displayed, such as a microphone control, an input box control or an expression control in the figure, wherein the video stream may include video works posted by different users.

Step 302: in response to detecting a user triggering the floating control, determining a trigger position and detecting a current gesture operation starting from the trigger position.

As illustrated in Fig. 4, the user may trigger the screen by fingers. When the user triggers the floating control 402 by fingers, the trigger position of the fingers is determined and the method continues to detect the gesture operation starting from the trigger position, the gesture operation for example being a swiping operation.

Step 303: determining a current operation type of a current gesture operation detected in accordance with a target region where the trigger position is located in the floating control.

As an example, according to Fig. 4, the floating control 402 may be divided into two regions, i.e., a first region 403 and a second region (the region in the floating control 402 apart from the first region 403). To facilitate the user to quickly determine the position of the first region at visual level, a region identifier is displayed in the first region 403, such as a transverse line in Fig. 4. The first region 403 corresponds to the first operation type and the second region corresponds to the second operation type. The first operation type indicates moving the floating control and the second operation type is to switch the media content currently presented in the floating control. Assuming that the trigger position falls within the first region 403, it is determined that the detected current gesture operation serves as the first operation type.

Step 304: determining whether the current operation type is the first operation type; if the current operation type is the first operation type, executing the step 305; if the current operation type is not the first operation type, executing the step 310.

Step 305: moving the floating control to a corresponding display position in the target interface based on at least one of the first operation type, an action direction of the current gesture operation, and an action distance and an action speed of the current gesture operation.

As an example, when it is determined that the current operation type is the first operation type, it is considered that the current user intends to move the floating control. Therefore, according to the action direction, action distance and action speed of the current gesture operation, the floating control is dynamically moved to a corresponding display position in the target interface along with the current gesture operation.

S306: in response to detecting that the user stops triggering the screen, judging whether the current display position of the floating control is the target display position; if the current display position of the floating control is the target display position, executing the step 307; if the current display position of the floating control is not the target display position, ending the procedure.

As an example, in the procedure of moving the floating control to the corresponding display position in the target interface, i.e., before the user stops triggering the screen, it is also judged in real time whether the current display position of the floating control is the target display position; if the current display position of the floating control is the target display position, a prompt message may be displayed, wherein the prompt message is configured to indicate that the media content in the floating control may be played in the background if the current user releases the fingers. As shown in Fig. 4, when the user moves the floating control to the center of the target interface, it is considered that the current display position is the target display position and a prompt message 404 "releasing to play in the background" may be displayed in the floating control.

Step 307: determining that a background play mode is triggered, presenting a first media content currently presented in the floating control as a background of the target interface and cancelling display of the floating control.

As an example, in case that the current display position of the floating control is the target display position when the user releases the fingers, the media content in the floating control may continue to be presented in the background of the target interface.

As shown in Fig. 4, before the user releases the fingers, a landscape video (the first media content) is being played in the floating control; after the user releases the fingers, the landscape video may continue to be played in the background of the target interface and the floating control disappears.

Step 308: in response to a first preset operation on the target interface by the user, switching to a hidden state play mode to present the first media content, thereby hiding the interface content displayed on the upper layer of the background in the background play mode; and displaying a preset control in the target interface.

As an example, the first preset operation may be a swiping operation. In the target interface, the user may browse the message content through swiping up and down and the first preset operation may be swiping left and right. According to Fig. 4, the user inputs an operation of swiping right, the interface content, such as the message content and the related control for triggering message input, is hidden. The landscape video continues to be played in the target interface, and the preset control is displayed in the target interface, where the preset control, for example, may include at least one interactive control, such as four interactive controls 405 in Fig. 4. The preset control, for example, also may include a floating control switching control, e.g., a switching button 406 in Fig. 4.

Step 309: in response to a second preset operation on the target interface by the user, switching a media content currently presented in the target interface.

As an example, after the interface content is hidden, the user may switch the media content in the target interface. According to Fig. 4, the user may switch the video content by inputting a swiping up operation to switch the video content, i.e., from the landscape video to a clown video.

Optionally, as illustrated in Fig. 4, the user also may trigger the display of the floating window by triggering the switching button 406 and switch the clown video currently presented in the target interface to the floating control to continue to play.

Step 310: switching from a second media content currently presented in the floating control to a third media content based on the second operation type and an action direction of the current gesture operation.

Wherein the third media content is a previous media content or a next media content of the second media content in the media stream.

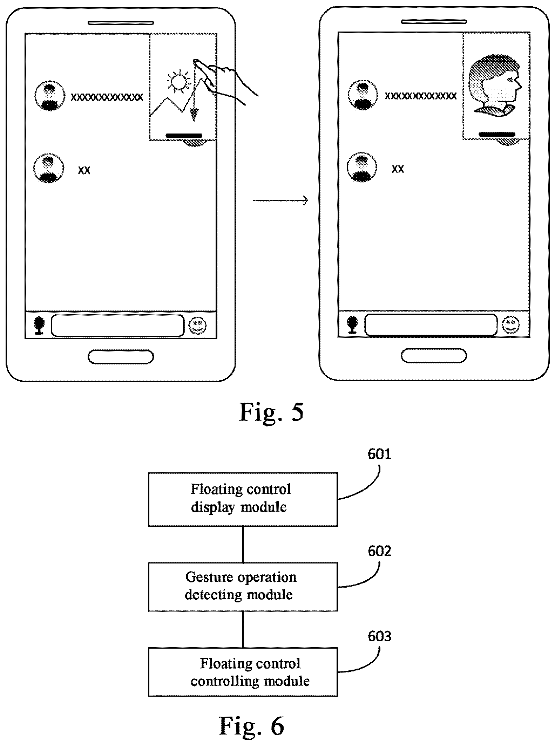

As an example, assuming that the trigger position determined when the user triggers the screen by fingers falls in the second region, the corresponding operation type is the second operation type. It is deemed that the current user intends to switch the media content in the floating control. Fig. 5 is a schematic diagram of a further interface interaction provided by embodiments of the present disclosure. As shown, the user inputs a swiping down operation to switch the landscape video (second media content) currently presented in the floating control to a character video (third media content). The media content can be conveniently switched by inputting a swiping up operation or a swiping down operation into the floating control.

According to the method for content presentation provided by embodiments of the present disclosure, a floating control for presenting the media content is displayed in the message exchange interface, so as to view the media content while chatting and accurately identify the operation type of the user gesture operation. Besides, in accordance with different operation types, the floating control for presenting the media stream is moved or the media content is switched, to control the floating control in a more flexible way. During the movement of the floating control, the media content may also be switched to the background and continues to be played in the interface background. The function of hiding interface contents is also provided in the target interface, to allow the user to conveniently switch to view the media content in full screen. In full-screen play, a plurality of preset controls is provided to facilitate the user to control or interact based on the media content. The media content may be switched back to play in the floating control. As a result, the media content is displayed in a more flexible way, to satisfy diversified needs of the users for viewing the media content and enhance the user experience.

In some embodiments, the presenting a first media content currently presented in the floating control as a background of the target interface and cancelling display of the floating control include: unbinding a canvas switching component from the floating control and binding the canvas switching component to a background view of the target interface, wherein the canvas switching component contains a plurality of canvases and the canvas is provided with a media player, the media player is configured to play a first media content currently presented in the floating control; obtaining associated information of the first media content from a preset database, continuing to present the first media content via the canvas switching component in the background view based on the associated information, and cancelling display of the floating control, wherein the associated information includes at least one of media ID, play progress and play state. With such setting, a smooth switching of the media content presentation can be guaranteed.

As an example, the canvas switching component, also known as interface switching component or view switching component (ViewInterfacer), includes a plurality of canvases, the canvas being referred to as ViewHolder. Each canvas may be configured to buffer one media content. Multiple media contents may be pulled in batch from the serving end via the canvas switching component. The number of media contents pulled at one time may be consistent with the number of canvases in the canvas switching component. For example, if five videos are pulled at one time, there may be five canvases. The canvas is provided with a media player, and the media player is configured to play the media content currently presented in the floating control. Each canvas may be independently provided with a media player, or a plurality of canvases may share the same media player. The present disclosure is not restricted in this regard.

In the embodiments of the present disclosure, both the floating control and the background view may be considered as a container for the canvas switching component. In case that the first media content currently presented in the floating control is required to be presented as the background of the target interface, the canvas switching component may be removed from the floating control (e.g., by calling remove view function) and placed in the background view. The removal process may be viewed as unbinding (e.g., by calling addview function), and the placement process may be seen as binding. To ensure continuity of the media content play before and after the change of container, while the media content is being presented in the floating control, the associated information of the currently presented media content may be stored into a preset database in real time, the associated information for example being at least one of media identifier (set to indicate identity of the media content; the form thereof is not defined), play progress and play state (including playing and paused etc.). After the canvas switching component is bound to the background view, the latest associated information may be obtained from the preset database and the media content continues to be presented in the background view via the canvas switching component based on the obtained associated information. Optionally, after the canvas switching component is bound to the background view of the target interface, preset parameters of the media player may be re-configured to adapt to the background view. The preset parameters, for example, may include size of the media player etc.

In some embodiments, the floating control is bound with a canvas switching component, and the canvas switching component includes a plurality of canvases, the canvas is provided with a media player, the media player is configured to play media contents loaded in corresponding canvases, to cause media contents to be presented in the floating control; wherein the switching from a second media content currently presented in the floating control to a third media content based on the second operation type and an action direction of the current gesture operation includes: delivering the current gesture operation to the canvas switching component based on the second operation type, such that the canvas switching component determines a second content identifier of a third media content to be switched in accordance with an action direction of the current gesture operation and a first content identifier of a second media content currently presented in the floating control; broadcasting the second content identifier to a plurality of canvases via the canvas switching component, such that a canvas matching with the second content identifier plays the second media content via a corresponding media player. The benefit of such setting is to accurately switch the media content in the floating control.

As an example, in the canvas switching component, the media content loaded in a plurality of canvases may be numbered and indicated with content ID. After the gesture operation of the second operation type is detected, a second content identifier is determined according to the action direction and a first content ID; and an observer pattern of EventBus (which may be interpreted as a broadcast mechanism) may be applied to notify all canvases in the canvas switching component to match the content identifier of the video buffered therein with the second content ID, to determine whether the processing should be made by themselves. For the successfully matched canvases, corresponding media contents may be loaded and rendered and played via the media player.

Fig. 6 illustrates a structural diagram of an apparatus for content presentation provided by embodiments of the present disclosure. As shown, the apparatus includes: a floating control display module 601, a gesture operation detecting module 602 and a floating control controlling module 603.

The floating control display module (601) is configured to display a floating control in a target interface and present a media stream in the floating control;

The gesture operation detecting module (602) is configured to, in response to detecting a user triggering the floating control, determine a trigger position and detect a current gesture operation starting from the trigger position;

The floating control controlling module (603) is configured to determine a current operation type of the detected current gesture operation in accordance with a target region where the trigger position is located in the floating control; and correspondingly control the floating control based on the current operation type and the current gesture operation, wherein different operation types correspond to different regions in the floating control

The apparatus for content presentation provided by embodiments of the present disclosure displays a floating control in a target interface and presents a media stream in the floating control; in response to detecting a user triggering the floating control, determines a trigger position and detects a current gesture operation starting from the trigger position; determines a current operation type of the detected current gesture operation in accordance with a target region where the trigger position is located in the floating control; and correspondingly controls the floating control based on the current operation type and the current gesture operation, wherein different operation types correspond to different regions in the floating control. With the above technical solution, the operation type of the user gesture operation may be accurately identified. The floating control for presenting the media stream is separately controlled in view of the different operation types, such that the floating control is more flexibly controlled and the media content is also flexibly presented, thereby satisfying diversified needs of the users for viewing the content media and enhancing the user experience.

Optionally, the operation type includes at least one of a first operation type and a second operation type; the first operation type is moving the floating control and the second operation type is switching a media content currently presented in the floating control.

Optionally, while correspondingly controlling the floating control based on the current operation type and the current gesture operation in response to the current operation type being the first operation type, the floating control controlling module is configured to:
move the floating control to a corresponding display position in the target interface based on at least one of the first operation type, an action direction of the current gesture operation, and an action distance and an action speed of the current gesture operation.

Optionally, the target interface includes a preset interface; and the apparatus further comprises:
a background play mode triggering module configured to, upon detecting that a background play mode is triggered in the target interface, present a first media content currently presented in the floating control as a background of the target interface and cancel display of the floating control.

Optionally, the detecting that a background play mode is triggered in the target interface includes: in response to receiving a preset gesture operation in the target interface, determining that triggering of a background play mode is detected, wherein the preset gesture operation is configured as triggering the background play mode.

Optionally, the operation type includes a first operation type and the first operation type is to move the floating control; while correspondingly controlling the floating control based on the current operation type and the current gesture operation in response to the current operation type being a first operation type, the floating control controlling module is configured to: move the floating control to a corresponding display position in the target interface based on the first operation type and the current gesture operation;
wherein the detecting that a background play mode is triggered in the target interface includes:
upon detecting that the user stops triggering a screen, determining whether a current display position of the floating control is a target display position; in response to a current display position of the floating control being a target display position, determining that triggering of a background play mode is detected.

Optionally, the target display position includes a position within a preset range in the target interface, the preset range containing a center point of the target interface.

Optionally, the target interface includes a message exchange interface, and the presenting a first media content currently presented in the floating control as a background of the target interface includes:
replacing a background of the target interface with a first media content currently presented in the floating control, to cause an interface content of the message exchange interface to be displayed on an upper layer of the first media content, wherein the interface content includes at least one of a message content and an associated content of the message content.

Optionally, the apparatus also may comprise:
a hidden state play mode switching module is configured to, in response to a first preset operation on the target interface by the user, switch to a hidden state play mode to present the first media content, wherein a interface content displayed on an upper layer of the first media content in the background play mode is hidden under the hidden state play mode.

Optionally, the apparatus also may comprise:
a content switching module configured to, after the switching to a hidden state play mode to present the first media content, switch a media content currently presented in the target interface in response to a second preset operation on the target interface by the user.

Optionally, the apparatus also may comprise:
a preset control display module configured to, after the switching to a hidden state play mode to present the first media content, display a preset control in the target interface; wherein the preset control is configured to execute at least one of: controlling a media content presented in the target interface; interacting with respect to a media content presented in the target interface; and triggering display of the floating control and switching a media content presented in the target interface to be presented in the floating control.

Optionally, while presenting a first media content currently presented in the floating control as a background of the target interface and cancelling display of the floating control, the background presentation module is configured to:
unbind a canvas switching component from the floating control and bind the canvas switching component to a background view of the target interface, wherein the canvas switching component contains a plurality of canvases and the canvas is provided with a media player, the media player is configured to play a first media content currently presented in the floating control;
obtain associated information of the first media content from a preset database, continue to present the first media content via the canvas switching component in the background view based on the associated information, and cancel display of the floating control, wherein the associated information includes at least one of a media identifier, play progress and a play state.

Optionally, while correspondingly controlling the floating control based on the current operation type and the current gesture operation in response to the current operation type being a second operation type, the floating control controlling module is configured to:
switch from a second media content currently presented in the floating control to a third media content based on the second operation type and an action direction of the current gesture operation, wherein the third media content is a previous media content or a next media content of the second media content in the media stream.

Optionally, the floating control is bound with a canvas switching component, and the canvas switching component includes a plurality of canvases, the canvas is provided with a media player, the media player is configured to play media contents loaded in corresponding canvases, to cause media contents to be presented in the floating control,
wherein the switching from a second media content currently presented in the floating control to a third media content based on the second operation type and an action direction of the current gesture operation includes:
delivering the current gesture operation to the canvas switching component based on the second operation type, such that the canvas switching component determines a second content identifier of a third media content to be switched in accordance with an action direction of the current gesture operation and a first content identifier of a second media content currently presented in the floating control;
broadcasting the second content identifier to a plurality of canvases via the canvas switching component, such that a canvas matching with the second content identifier plays the second media content via a corresponding media player.

The apparatus for content presentation provided by embodiments of the present disclosure may execute the method for content presentation provided by any embodiments of the present disclosure, and contain corresponding functional modules for executing the method. Respective effects are also achieved.

It is to be noteworthy that the respective units and modules included in the above apparatus are divided only by functional logic. The units and modules may also be divided in other ways as long as they can fulfill the corresponding functions. Further, the names of the respective functional units are provided only to distinguish one from another, rather than restricting the protection scope of the embodiments of the present disclosure.

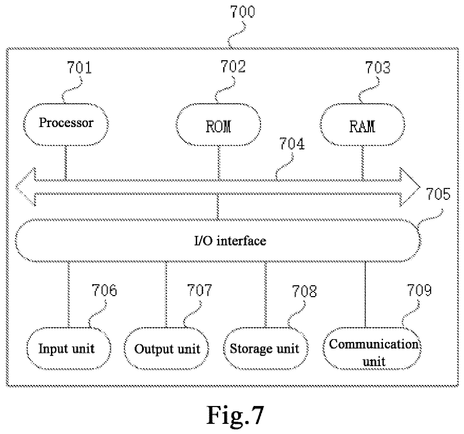

Fig. 7 illustrates a structural diagram of an electronic device provided by the embodiments of the present disclosure. With reference to Fig. 7, a structural diagram of an electronic device (e.g., terminal device or server in Fig. 7) 700 adapted to implement embodiments of the present disclosure is shown. In the embodiments of the present disclosure, the terminal device may include, but not limited to, mobile terminals, such as mobile phones, notebooks, digital broadcast receivers, Personal Digital Assistant (PDAs), tablet computer (PADs), Portable Multimedia Player (PMPs) and vehicle terminals (such as car navigation terminal) and fixed terminals, e.g., digital TVs and desktop computers etc. The electronic device shown in Fig. 7 is just an example and will not restrict the functions and application ranges of the embodiments of the present disclosure.

According to Fig. 7, the electronic device 700 may include a processor (e.g., central processor, graphic processor and the like) 701, which can execute various suitable actions and processing based on the programs stored in the read-only memory (ROM) 702 or programs loaded in the random-access memory (RAM) 703 from a storage unit 708. The RAM 703 can also store all kinds of programs and data required by the operations of the electronic device 700. Processor 701, ROM 702 and RAM 703 are connected to each other via a bus 704. The input/output (I/O) interface 705 is also connected to the bus 704.

Usually, input unit 706 (including touch screen, touch pad, keyboard, mouse, camera, microphone, accelerometer, gyroscope and like) and output unit 707 (including liquid crystal display (LCD), speaker and vibrator etc.), storage unit 708 (including tape and hard disk etc.) and communication unit 709 may be connected to the I/O interface 705. The communication unit 709 may allow the electronic device 700 to exchange data with other devices through wired or wireless communications. Although Fig. 7 illustrates the electronic device 700 having various units, it is to be understood that it is not a prerequisite to implement or provide all illustrated units. Alternatively, more or less units may be implemented or provided.

In particular, in accordance with embodiments of the present disclosure, the process depicted above with reference to the flowchart may be implemented as computer software programs. For example, the embodiments of the present disclosure include a computer program product including computer programs carried on a non-transient computer readable medium, wherein the computer programs include program codes for executing the method demonstrated by the flowchart. In these embodiments, the computer programs may be loaded and installed from networks via the communication unit 709, or installed from the storage unit 708, or installed from the ROM 702. The computer programs, when executed by the processor 701, performs the above functions defined in the method for video editing according to the embodiments of the present disclosure.

The electronic device provided by the embodiments of the present disclosure and the content presentation method according to the above embodiments belong to the same concept. The technical details not elaborated in these embodiments may refer to the above embodiments. Besides, these embodiments and the above embodiments achieve the same effects.

Embodiments of the present disclosure provide a computer-readable storage medium on which computer programs are stored, which programs when executed by a processor implement the content presentation method provided by the above embodiments.

It is to be explained the above disclosed computer readable medium may be computer readable signal medium or computer readable storage medium or any combinations thereof. The computer readable storage medium for example may include, but not limited to, electric, magnetic, optical, electromagnetic, infrared or semiconductor systems, apparatus or devices or any combinations thereof. Specific examples of the computer readable storage medium may include, but not limited to, electrical connection having at least one wire, portable computer disk, hard disk, random access memory (RAM), read-only memory (ROM), erasable programmable read only memory (EPROM or flash memory), fiber optics, portable compact disk read only memory (CD-ROM), optical storage device, magnetic storage device, or any suitable combinations thereof. In the present disclosure, the computer readable storage medium may be any tangible medium that contains or stores programs. The programs may be utilized by instruction execution systems, apparatuses or devices in combination with the same. In the present disclosure, the computer readable signal medium may include a data signal propagated in baseband or as part of a carrier wave, carrying computer readable program codes therein. Such propagated data signals may take many forms, including but not limited to, electromagnetic signals, optical signals, or any suitable combinations thereof. The computer readable signal medium may also be any computer readable medium in addition to the computer readable storage medium. The computer readable signal medium may send, propagate, or transmit programs for use by or in connection with instruction execution systems, apparatuses or devices. Program codes contained on the computer readable medium may be transmitted by any suitable media, including but not limited to: electric wires, fiber optic cables and radio frequency (RF) etc., or any suitable combinations thereof.

In some implementations, clients and servers may communicate with each other via any currently known or to be developed network protocols, such as HyperText Transfer Protocol (HTTP) and interconnect with digital data communications in any forms or media (such as communication networks). Examples of the communication networks include Local Area Network (LAN), Wide Area Network (WAN), internet work (e.g., Internet) and end-to-end network (such as ad hoc end-to-end network), and any currently known or to be developed networks.

The above computer readable medium may be included in the aforementioned electronic device or stand-alone without fitting into the electronic device.

The above computer readable medium bears at least one program. When the above at least one program is executed by the electronic device, the electronic device is enabled to: display a floating control in a target interface and present a media stream in the floating control; in response to detecting a user triggering the floating control, determine a trigger position and detect a current gesture operation starting from the trigger position; determine a current operation type of a current gesture operation detected in accordance with a target region where the trigger position is located in the floating control; and correspondingly control the floating control based on the current operation type and the current gesture operation, wherein different operation types correspond to different regions in the floating control.

Computer program instructions for executing operations of the present disclosure may be written in at least one programming language or combinations thereof. The above programming languages include, but not limited to, object-oriented programming languages, e.g., Java, Smalltalk, C++ and so on, and traditional procedural programming languages, such as "C" language or similar programming languages. The program codes can be implemented fully on the user computer, partially on the user computer, as an independent software package, partially on the user computer and partially on the remote computer, or completely on the remote computer or server. In the case where remote computer is involved, the remote computer can be connected to the user computer via any type of networks, including local area network (LAN) and wide area network (WAN), or to the external computer (e.g., connected via Internet using the Internet service provider).

The flow chart and block diagram in the drawings illustrate system architecture, functions and operations that may be implemented by system, method and computer program product according to various implementations of the present disclosure. In this regard, each block in the flow chart or block diagram can represent a module, a part of program segment or code, wherein the module and the part of program segment or code include at least one executable instruction for performing stipulated logic functions. In some alternative implementations, it should be noted that the functions indicated in the block can also take place in an order different from the one indicated in the drawings. For example, two successive blocks can be in fact executed in parallel or sometimes in a reverse order dependent on the involved functions. It should also be noted that each block in the block diagram and flow chart and combinations of the blocks in the block diagram and flow chart can be implemented by a hardware-based system exclusive for executing stipulated functions or actions, or by a combination of dedicated hardware and computer instructions.

Units described in the embodiments of the present disclosure may be implemented by software or hardware. In some cases, the name of the module should not be considered as the restriction over the module per se. For example, the floating control display module also may be described as "a module for displaying a floating control in a target interface and presenting a media stream in the floating control".

The functionality described herein can be performed, at least in part, by at least one hardware logic component. For example, and without limitation, illustrative types of hardware logic components that can be used include Field-Programmable Gate Arrays (FPGAs), Application-specific Integrated Circuits (ASICs), Application-specific Standard Products (ASSPs), System-on-a-chip systems (SOCs), Complex Programmable Logic Devices (CPLDs), and the like.

In the context of the present disclosure, machine readable medium may be tangible medium that may include or store programs for use by or in connection with instruction execution systems, apparatuses or devices. The machine readable medium may be machine readable signal medium or machine readable storage medium. The machine readable storage medium for example may include, but not limited to, electric, magnetic, optical, electromagnetic, infrared or semiconductor systems, apparatus or devices or any combinations thereof. Specific examples of the machine readable storage medium may include, but not limited to, electrical connection having at least one wire, portable computer disk, hard disk, random access memory (RAM), read-only memory (ROM), erasable programmable read only memory (EPROM), flash memory, fiber optics, portable compact disk read only memory (CD-ROM), optical storage device, magnetic storage device, or any suitable combinations thereof.

In accordance with one or more embodiments of the present disclosure, there is provided a method for content presentation, comprising:
displaying a floating control in a target interface and presenting a media stream in the floating control;
in response to detecting a user triggering the floating control, determining a trigger position and detecting a current gesture operation starting from the trigger position;
determining a current operation type of the detected current gesture operation in accordance with a target region where the trigger position is located in the floating control; and correspondingly controlling the floating control based on the current operation type and the current gesture operation, wherein different operation types correspond to different regions in the floating control.

In accordance with one or more embodiments of the present disclosure, the operation type includes at least one of a first operation type and a second operation type; the first operation type is moving the floating control and the second operation type is switching a media content currently presented in the floating control.

In accordance with one or more embodiments of the present disclosure, the current operation type is a first operation type; and the correspondingly controlling the floating control based on the current operation type and the current gesture operation includes:
moving the floating control to a corresponding display position in the target interface based on at least one of the first operation type, an action direction of the current gesture operation, and an action distance and an action speed of the current gesture operation.

In accordance with one or more embodiments of the present disclosure, the target interface includes a preset interface; and the method further comprises:
upon detecting that a background play mode is triggered in the target interface, presenting a first media content currently presented in the floating control as a background of the target interface and cancelling display of the floating control.

In accordance with one or more embodiments of the present disclosure, the detecting that a background play mode is triggered in the target interface includes:
in response to receiving a preset gesture operation in the target interface, determining that triggering of a background play mode is detected, wherein the preset gesture operation is configured as triggering the background play mode.

In accordance with one or more embodiments of the present disclosure, the operation type includes a first operation type and the first operation type is moving the floating control;
wherein the current operation type is a first operation type; and the correspondingly controlling the floating control based on the current operation type and the current gesture operation includes:
moving the floating control to a corresponding display position in the target interface based on the first operation type and the current gesture operation;
wherein the detecting that a background play mode is triggered in the target interface includes:
upon detecting that the user stops triggering a screen, determining whether a current display position of the floating control is a target display position;
in response to a current display position of the floating control being a target display position, determining that triggering of a background play mode is detected.

In accordance with one or more embodiments of the present disclosure, the target display position includes a position within a preset range in the target interface, the preset range containing a center point of the target interface.

In accordance with one or more embodiments of the present disclosure, the target interface includes a message exchange interface, and the presenting a first media content currently presented in the floating control as a background of the target interface includes:
replacing a background of the target interface with a first media content currently presented in the floating control, to cause an interface content of the message exchange interface to be displayed on an upper layer of the first media content, wherein the interface content includes at least one of a message content and an associated content of the message content.

In accordance with one or more embodiments of the present disclosure, after presenting a first media content currently presented in the floating control as a background of the target interface and cancelling display of the floating control, the method comprises:
in response to a first preset operation on the target interface by the user, switching to a hidden state play mode to present the first media content, wherein an interface content displayed on an upper layer of the first media content in the background play mode is hidden under the hidden state play mode.

In accordance with one or more embodiments of the present disclosure, after the switching to a hidden state play mode to present the first media content, the method further comprises:
in response to a second preset operation on the target interface by the user, switching a media content currently presented in the target interface.

In accordance with one or more embodiments of the present disclosure, after the switching to a hidden state play mode to present the first media content, the method further comprises:
displaying a preset control in the target interface;
wherein the preset control is configured to execute at least one of:
   controlling a media content presented in the target interface;
   interacting with respect to a media content presented in the target interface; and,
   triggering display of the floating control and switching a media content presented in the target interface to be presented in the floating control.

In accordance with one or more embodiments of the present disclosure, the presenting a first media content currently presented in the floating control as a background of the target interface and cancelling display of the floating control include:
unbinding a canvas switching component from the floating control and binding the canvas switching component to a background view of the target interface, wherein the canvas switching component contains a plurality of canvases and the canvas is provided with a media player, the media player is configured to play a first media content currently presented in the floating control;
obtaining associated information of the first media content from a preset database, continuing to present the first media content via the canvas switching component in the background view based on the associated information, and cancelling display of the floating control, wherein the associated in formation includes at least one of media ID, play progress and play state.

In accordance with one or more embodiments of the present disclosure, the current operation type is a second operation type; and the correspondingly controlling the floating control based on the current operation type and the current gesture operation includes:
switching from a second media content currently presented in the floating control to a third media content based on the second operation type and an action direction of the current gesture operation, wherein the third media content is a previous media content or a next media content of the second media content in the media stream.

In accordance with one or more embodiments of the present disclosure, the floating control is bound with a canvas switching component, and the canvas switching component includes a plurality of canvases; the canvas is provided with a media player, the media player is configured to play media contents loaded in corresponding canvases, to cause media contents to be presented in the floating control;
wherein the switching from a second media content currently presented in the floating control to a third media content based on the second operation type and an action direction of the current gesture operation includes:
delivering the current gesture operation to the canvas switching component based on the second operation type, such that the canvas switching component determines a second content identifier of a third media content to be switched in accordance with an action direction of the current gesture operation and a first content identifier of a second media content currently presented in the floating control;
broadcasting the second content identifier to a plurality of canvases via the canvas switching component, such that a canvas matching with the second content identifier plays the second media content via a corresponding media player.

In accordance with one or more embodiments of the present disclosure, there is provided an apparatus for content presentation, comprising:
a floating control display module configured to display a floating control in a target interface and present a media stream in the floating control;
a gesture operation detecting module configured to, in response to detecting a user triggering the floating control, determine a trigger position and detect a current gesture operation starting from the trigger position;
a floating control controlling module configured to determine a current operation type of the detected current gesture operation in accordance with a target region where the trigger position is located in the floating control; and correspondingly control the floating control based on the current operation type and the current gesture operation, wherein different operation types correspond to different regions in the floating control.

In accordance with one or more embodiments of the present disclosure, there is provided an electronic device, comprising:
at least one processor;
a memory device configured to store at least one program;
when the at least one program is executed by the at least one processor, the at least one processor is enabled to implement the method for content presentation provided by the embodiments of the present disclosure.

In accordance with at least one embodiment, there is provided a storage medium containing computer-executable instructions, the computer-executable instructions, when executed by a computer processor, implementing the method for content presentation provided by the embodiments of the present disclosure.

## Claims

1. A method for content presentation, comprising:
displaying a floating control in a target interface and presenting a media stream in the floating control;
in response to detecting a user triggering the floating control, determining a trigger position and detecting a current gesture operation starting from the trigger position; and
determining a current operation type of the detected current gesture operation in accordance with a target region where the trigger position is located in the floating control; and correspondingly controlling the floating control based on the current operation type and the current gesture operation, wherein different operation types correspond to different regions in the floating control.

2. The method of claim 1, wherein the operation type includes at least one of a first operation type and a second operation type, the first operation type is moving the floating control and the second operation type is switching a media content currently presented in the floating control.

3. The method of claim 2, wherein the current operation type is the first operation type; and the correspondingly controlling the floating control based on the current operation type and the current gesture operation comprises:
moving the floating control to a corresponding display position in the target interface based on at least one of the first operation type, an action direction of the current gesture operation, and an action distance and an action speed of the current gesture operation.

4. The method of claim 1, wherein the target interface includes a preset interface; and the method further comprises:
in response to detecting that a background play mode is triggered in the target interface, presenting a first media content currently presented in the floating control as a background of the target interface and cancelling display of the floating control.

5. The method of claim 4, wherein the detecting that a background play mode is triggered in the target interface comprises:
in response to receiving a preset gesture operation in the target interface, determining that the triggering of a background play mode is detected, wherein the preset gesture operation is configured as triggering the background play mode.

6. The method of claim 4, wherein the operation type includes a first operation type and the first operation type is moving the floating control; and
wherein the current operation type is the first operation type; and the correspondingly controlling the floating control based on the current operation type and the current gesture operation comprises:
moving the floating control to a corresponding display position in the target interface based on the first operation type and the current gesture operation; and
wherein the detecting that a background play mode is triggered in the target interface comprises:
in response to detecting that the user stops triggering a screen, determining whether a current display position of the floating control is a target display position; and
in response to the current display position of the floating control being a target display position, determining that the triggering of a background play mode is detected.

7. The method of claim 6, wherein the target display position includes a position within a preset range in the target interface, and the preset range contains a center point of the target interface.

8. The method of claim 4, wherein the target interface includes a message exchange interface, and the presenting a first media content currently presented in the floating control as a background of the target interface comprises:
replacing a background of the target interface with a first media content currently presented in the floating control, to cause an interface content of the message exchange interface to be displayed on an upper layer of the first media content, wherein the interface content includes at least one of a message content and an associated content of the message content.

9. The method of claim 4, wherein the method comprises, after presenting a first media content currently presented in the floating control as a background of the target interface and cancelling display of the floating control,
in response to a first preset operation on the target interface by the user, switching to a hidden state play mode to present the first media content, wherein an interface content displayed on an upper layer of the first media content in the background play mode is hidden under the hidden state play mode.

10. The method of claim 9, wherein the method further comprises, after the switching to a hidden state play mode to present the first media content:
in response to a second preset operation on the target interface by the user, switching a media content currently presented in the target interface.

11. The method of claim 9, wherein the method further comprises, after the switching to a hidden state play mode to present the first media content:
displaying a preset control in the target interface; and
wherein the preset control is configured to execute at least one of:
controlling a media content presented in the target interface;
interacting with respect to the media content presented in the target interface; or,
triggering the display of the floating control and switching a media content presented in the target interface to be presented in the floating control.

12. The method of any of claims 4-11, wherein the presenting a first media content currently presented in the floating control as a background of the target interface and cancelling display of the floating control comprise:
unbinding a canvas switching component from the floating control and binding the canvas switching component to a background view of the target interface, wherein the canvas switching component contains a plurality of canvases, the canvas is provided with a media player, and media player is configured to play a first media content currently presented in the floating control; and
obtaining associated information of the first media content from a preset database, continuing to present the first media content via the canvas switching component in the background view based on the associated information, and cancelling the display of the floating control, wherein the associated information includes at least one of a media identifier, play progress and a play state.

13. The method of claim 2, wherein the current operation type is a second operation type; and the correspondingly controlling the floating control based on the current operation type and the current gesture operation comprises:
switching from a second media content currently presented in the floating control to a third media content based on the second operation type and an action direction of the current gesture operation, wherein the third media content is a previous media content or a next media content of the second media content in the media stream.

14. The method of claim 13, wherein the floating control is bound with a canvas switching component, the canvas switching component includes a plurality of canvases, the canvas is provided with a media player, and the media player is configured to play media contents loaded in corresponding canvases, to cause media contents to be presented in the floating control; and
wherein the switching from a second media content currently presented in the floating control to a third media content based on the second operation type and an action direction of the current gesture operation comprises:
delivering the current gesture operation to the canvas switching component based on the second operation type, such that the canvas switching component determines a second content identifier of a third media content to be switched in accordance with an action direction of the current gesture operation and a first content identifier of a second media content currently presented in the floating control; and
broadcasting the second content identifier to the plurality of canvases via the canvas switching component, such that a canvas matching with the second content identifier plays the second media content via a corresponding media player.

15. An apparatus for content presentation, comprising:
a floating control display module (601) configured to display a floating control in a target interface and present a media stream in the floating control;
a gesture operation detecting module (602) configured to, in response to detecting a user triggering the floating control, determine a trigger position and detect a current gesture operation starting from the trigger position; and
a floating control controlling module (603) configured to determine the detected current operation type of a current gesture operation in accordance with a target region where the trigger position is located in the floating control; and correspondingly control the floating control based on the current operation type and the current gesture operation, wherein different operation types correspond to different regions in the floating control.

16. The apparatus of claim 15, comprising modules for executing the method according to any of claims 2-14.

17. An electronic device, comprising:
at least one processor; and
a memory device configured to store at least one program which, when executed by the at least one processor, causes the at least one processor to implement the method for content presentation according to any of claims 1-14.

18. A storage medium containing computer-executable instructions which, when executed by a computer processor, implement the method for content presentation according to any of claims 1-14.
